# EUROPÄISCHE PATENTANMELDUNG

(11) **EP 2 119 629 A1**
(43) Veröffentlichungstag der Anmeldung: **18.11.2009**
(21) Anmeldenummer: 09158451.6
(22) Anmeldetag: 22.04.2009
(51) Int. Cl.: B65B 9/20, B65B 61/18, B65B 51/30

(54) **Schlauchbeutelmaschine und Verfahren**

(30) Priorität: 22.04.2008 US 46889 P
(71) Anmelder: ROVEMA-VERPACKUNGSMASCHINEN GMBH, 35463 Fernwald-Annerod (DE)
(72) Erfinder: Eberhardt, Eric, Grayson, Georgia, 30017 (US)
(74) Vertreter: Tappe, Hartmut

(57) **Zusammenfassung**

Die Erfindung betrifft ein Verfahren und eine Vorrichtung zum Herstellen eines Schlauchbeutels, umfassend folgende Schritte:
Zuführen von Film zu einer Schlauchbeutelmaschine;
Verformen des Films an zwei Stellen mittels zweier Stempel (26) einer Einbuchtungsformvorrichtung (24), um zwei Einbuchtungen in dem Film zu formen;
Formen des Films zu einem Schlauch, wobei die beiden Einbuchtungen miteinander ausgerichtet sind;
Siegeln des Schlauches mittels Schweißbacken (13), um eine Quersiegelungszone zu bilden, wobei die ausgerichteten Einbuchtungen in Leerräumen (41) in den Siegelbacken (13) aufgenommen werden und gemeinsam eine Luftblase in der Quersiegelungszone definieren; und Abtrennen gesiegelter Abschnitte des Schlauches zu Säcken.

## Beschreibung

### HINTERGRUND DER ERFINDUNG

Viele Lebensmittel wie Käse, Kaffee usw. werden in versiegelten Kunststoffbeuteln verpackt, um die Frische der Lebensmittel zu erhalten. Allerdings können herkömmliche Kunststoffverpackungen für Lebensmittel schwierig zu öffnen sein. Beispielsweise können viele Beutel obere und untere heißgepresste aufziehbare Siegelungszonen aufweisen und, um die Packung zu öffnen, muss der Konsument die Seiten des Beutels auseinander ziehen, um die Siegelung zu öffnen. Dies kann relativ schwierig und frustrierend sein, insbesondere für ältere und sehr junge Menschen, deren Finger nicht kräftig sind.

Um dieses Problem zu beheben, wurde eine verbesserte Verpackung mit einer in der oberen Siegelungszone ausgebildeten Blase entwickelt. Der/Die Konsument/Konsumentin drückt die Blase zwischen seinen/ihren Fingern zusammen, und der Druck der Luft auf die Siegelungszone bewirkt, dass die Siegelungszone aufreißt. Durch das Zerplatzen der Blase wird die Luft in der Blase durch die obere Siegelungszone, wo diese aufriss, und aus dem oberen Ende des Beutels hinausgetrieben. Daraufhin kann man die oberen freien Kanten des Beutels, die durch die zerplatzte Blase von einander getrennt wurden, erfassen, um die Seiten des Beutels auseinander zu ziehen, um den Beutel zu öffnen. Demnach ist dieser "Pop-to-Open"-Beutel einfacher zu öffnen als herkömmliche Verpackungen.

Allerdings muss diese Art von Beutel sorgfältig und präzise hergestellt werden, damit die Blase zuverlässig und geeignet aufplatzt, um für den gewünschten Öffnungskomfort zu sorgen. Bislang war nur bekannt, diese Art von Beutel mit von Hand in der Siegelungszone ausgebildeter Blase herzustellen. Dies erhöht die Kosten erheblich und macht diese Art von Beutel für die ausgedehnte Anwendung zu teuer.

Somit ist zu ersehen, dass ein Bedarf an verbesserten Maschinen und Verfahren zum Herstellen versiegelter Kunststoffverpackungen besteht, die einfach zu öffnen sind. Insbesondere besteht ein Bedarf an Maschinen und Verfahren zur Herstellung von Pop-to-Open-Verpackungen, die sich zuverlässig öffnen und wirtschaftlich fertigen lassen. Die vorliegende Erfindung zielt in erster Linie auf die Bereitstellung von Lösungen zur Deckung dieses Bedarfs und weiterer Bedürfnisse ab.

### BESCHREIBUNG VON AUSFÜHRUNGSBEISPIELEN DER ERFINDUNG

Allgemein beschrieben umfasst die vorliegende Erfindung eine verbesserte Schlauchbeutelmaschine und ein Verfahren zur Herstellung von Pop-to-Open-Beuteln. Die Maschine kann herkömmlichen Schlauchbeutelmaschinen ähneln, wobei eine Einbuchtungsformvorrichtung und eine modifizierte Quersiegelvorrichtung hinzugefügt wurden. Die Einbuchtungsformvorrichtung umfasst vorzugsweise zwei Stempel, welche dazu dienen, um zwei Einbuchtungen in Kunststofffilm herzustellen, welcher der Maschine zugeführt wird. Und die Quersiegelvorrichtung umfasst zwei gegenüberliegend angeordnete Schweißbacken, wobei jede einen Leerraum aufweist, der angeordnet ist, um, nachdem der Film mit den zwei Einbuchtungen miteinander ausgerichtet zu einem Schlauch geformt wurde, die miteinander ausgerichteten Einbuchtungen darin aufzunehmen. Die Backen wirken zusammen, um einen Abschnitt des Schlauches zu einer Siegelungszone zu formen, wobei die miteinander ausgerichteten Einbuchtungen, die nicht miteinander versiegelt werden, da sie in den Leerräumen aufgenommen werden, in der Siegelungszone eine Blase bilden. Beispiele für herkömmliche Schlauchbeutelmaschinen sind in den US-Patenten Nr. 7,069,707; 7,028,451; 6,729,112 und 6,615,567 dargestellt und beschrieben, welche hiermit durch Bezugnahme zur Gänze dem vorliegenden Dokument einverleibt werden.

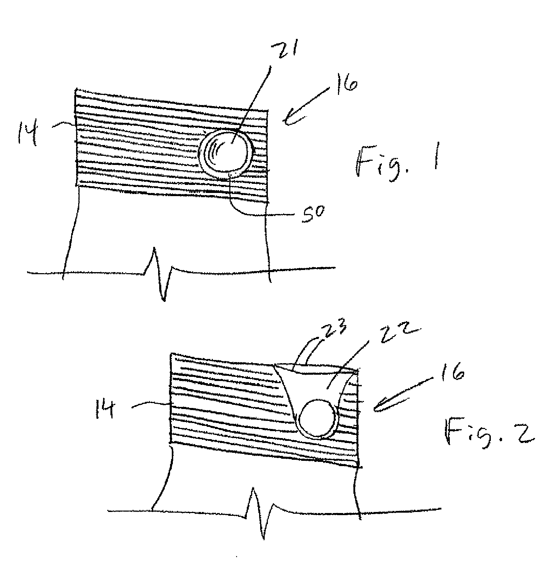

In einem anderen Aspekt umfasst die vorliegende Erfindung einen Pop-to-Open-Beutel, der mittels der Maschine und/oder des Verfahrens, die in diesem Dokument beschrieben werden, hergestellt wird. FIG. 1 und 2 zeigen ein Ausführungsbeispiel für einen Pop-to-Open-Beutel 16, der mittels der in diesem Dokument beschriebenen Maschine und mittels des in diesem Dokument beschriebenen Verfahrens hergestellt wurde. Der Beutel 16 weist eine Blase 21 auf, die in der oberen aufziehbaren Siegelungszone 14 ausgebildet ist, wie aus FIG. 1 hervorgeht. Die Form der Blase 21 kann auch nicht kreisförmig sein, die Größe der Blase kann auch nicht größer oder kleiner sein, und die Breite der Siegelungszone 14 kann größer oder kleiner sein, wie in diesem Dokument beschrieben wird.

Um den Beutel 16 zu öffnen, drückt der/die Benutzer/Benutzerin die Blase 21 zwischen seinen/ihren Fingern zusammen, und der Druck der Luft auf die Siegelungszone 14 bewirkt, dass die Siegelungszone an einer Bruchzone 22 aufreißt, wie in FIG. 2 dargestellt ist. Demnach platzt die Blase 21 auf, wobei die Luft in der Blase durch die Bruchzone 22 in der oberen Siegelungszone 21 nach außen und aus dem oberen Ende des Beutels 16 getrieben wird. Dann können die oberen freien Kanten 23 des Beutels, die von einander durch die aufplatzende Blase getrennt wurden, ergriffen werden, um die Seiten des Beutels auseinander zu ziehen, um den Rest der Siegelungszone aufzuziehen und dadurch den Beutel zu öffnen. Folglich ist dieser Pop-to-Open-Beutel 16 einfacher zu öffnen als herkömmliche Verpackungen.

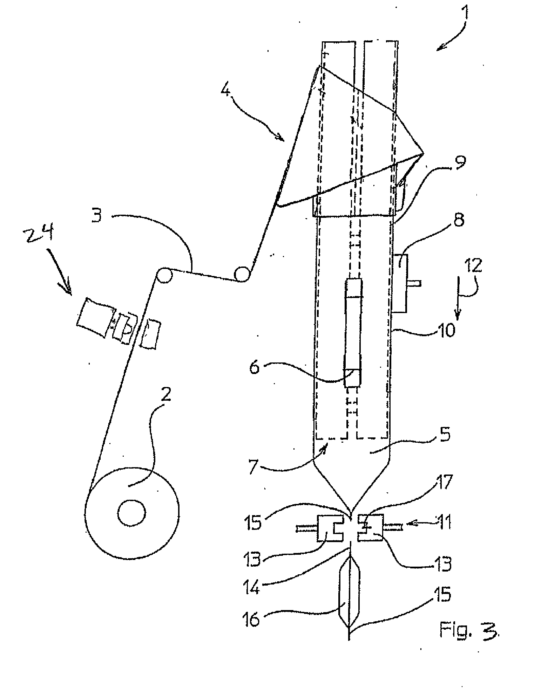

Nunmehr wird eine beispielhafte Schlauchbeutelmaschine ausführlich beschrieben. FIG. 3 zeigt eine Schlauchbeutelmaschine 1 gemäß einem erfindungsgemäßen Ausführungsbeispiel. Eine Folienbahn 3 (z.B. ein Kunststofffilm) wird von einer Vorratsrolle 2 abgewickelt. Eine Formschulter 4 wird verwendet, um die Folienbahn 3 zu einem Folienschlauch 5 umzuformen. Eine Folientransportvorrichtung 6 wird verwendet, um die Folienbahn 3 und den Folienschlauch 5 weiter zu transportieren. Ein vertikal ausgerichtetes Füllrohr 7 ist vorgesehen, um den Folienschlauch 5 aufzunehmen und zu befüllen. Eine Längssiegelvorrichtung 8 wird verwendet, um die Kanten 9 der Folienbahn 3 zu verschweißen und dadurch eine Längssiegelnaht 10 des Folienschlauches 5 herzustellen. Eine Quersiegelvorrichtung 11 mit Schweißbacken 13, die zueinander hin bewegt werden können und die den Folienschlauch 5 in Bezug auf seine Transportrichtung 12 quer verschweißen, ist vorgesehen, um obere Nähte 14 und untere Nähte 15 an Schlauchbeuteln 16 herzustellen. Eine Trennvorrichtung 17 wird verwendet, um den Schlauchbeutel 16 von dem Folienschlauch 5 zu trennen. Diese Komponenten sind für herkömmliche vertikale Schlauchbeutelmaschinen typisch.

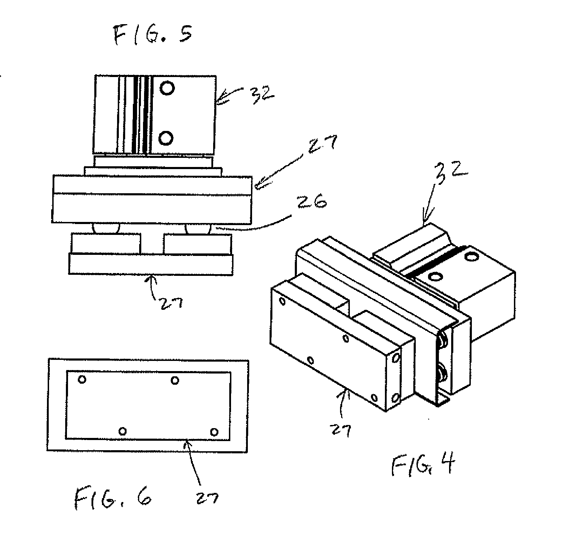

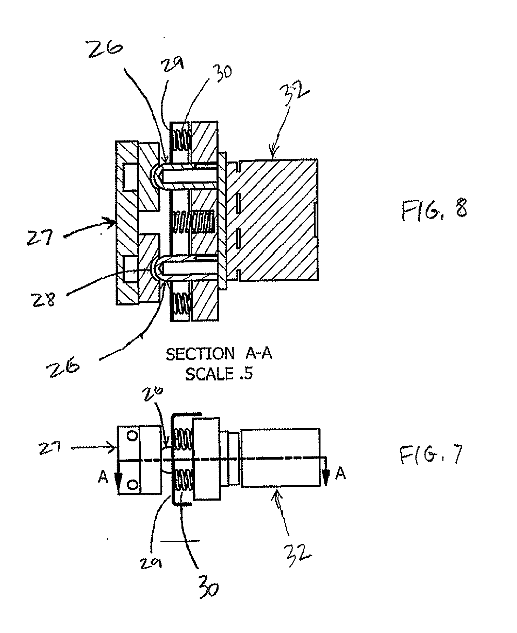

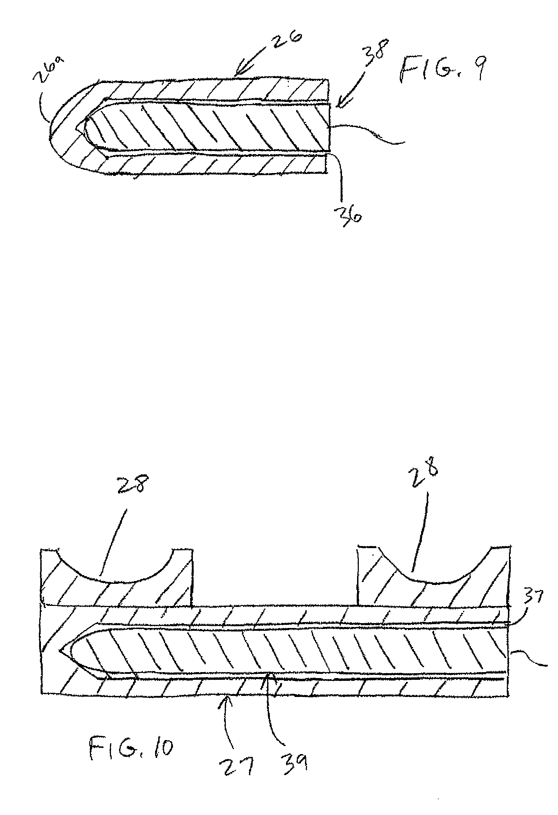

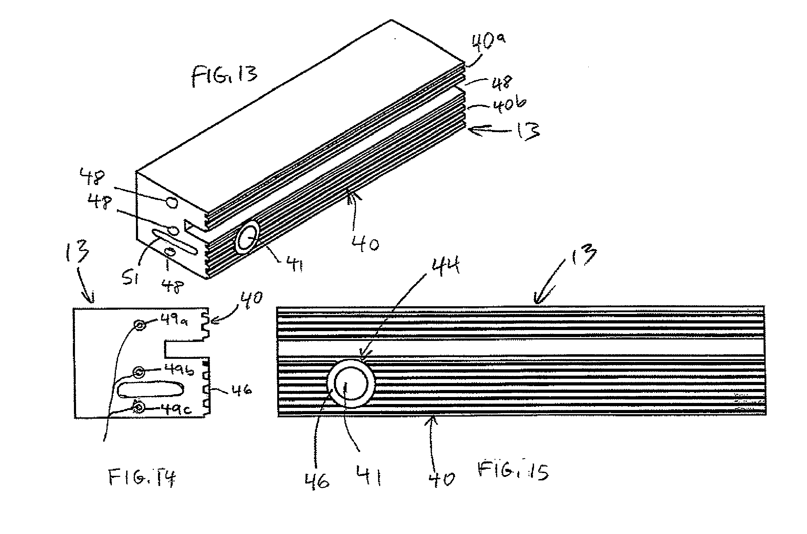

Darüber hinaus umfasst die Maschine 1 eine Einbuchtungsformvorrichtung 24, und die Quersiegelvorrichtung 11 ist für diese Anwendung modifiziert. Details der Einbuchtungsformvorrichtung 24 sind in FIG. 4-12 dargestellt, und Details der Quersiegelvorrichtung 25 sind in FIG. 13-20 dargestellt.

Auf FIG. 4-12 Bezug nehmend umfasst die Einbuchtungsformvorrichtung 24 mindestens zwei Stempel 26, die sich aus einer eingefahrenen Position in eine ausgefahrene Position bewegen. Bei Ausführungsformen zum Herstellen von Beuteln 16 mit einer Blase 21 weist die Einbuchtungsformvorrichtung 24 zwei Stempel 26 auf, die voneinander beabstandet sind, derart, dass, wenn der Film zu dem Schlauch geformt wird, die durch die Stempel geformten Einbuchtungen miteinander ausgerichtet sind. Die Stempel 16 können seitlich in verschiedene Positionen einstellbar sein, so dass die Lage der Einbuchtungen in dem Film für Filme mit unterschiedlicher Breite eingestellt werden kann, um Beutel von unterschiedlicher Größe herzustellen. Beispielsweise kann die Einbuchtungsformvorrichtung 24 mittels herkömmlicher Montagekonstruktionen wie Klammern, welche sich mit Stangen, Stäben oder anderen Konstruktionselementen verbinden lassen, die sich quer über die Maschine zwischen Rahmengliedern der Maschine erstrecken, an der Maschine 1 angebracht sein.

Die Stempel 26 sind vorzugsweise in Form von Gliedern vorgesehen, die aus Metall (z.B. Stahl) oder einem anderen Material von ausreichender Härte zum Formen der Einbuchtungen hergestellt sind, ein halbkugelförmiges filmberührendes Ende 26a zum Formen von kuppelförmigen Einbuchtungen aufweisen und zum Formen der Einbuchtungen in der gewünschten Größe ausgelegt sind. Einbuchtungen mit dem ungefähren Durchmesser eines US-Zehncentstücks erwiesen sich als wirksam, wenngleich größere oder kleinere Größen verwendet werden können. Größere Einbuchtungen haben die Verwendung von mehr Film je Beutel zur Folge, und kleinere Einbuchtungen ergeben Blasen, die sich eventuell nicht so leicht aufplatzen lassen. Für Fachkundige ist es naheliegend, dass die Stempel in anderen Größen, Formen und Materialien bereitgestellt werden können, je nachdem, was bei einer bestimmten Anwendung zweckmäßig ist.

Darüber hinaus umfasst die Einbuchtungsformvorrichtung 24 eine Gegenplatte 27, eine Pressplatte 29, mindestens ein Federelement 30, eine Basis 31 und ein Betätigungsglied 32. Die Gegenplatte 27 weist Ausnehmungen 28 darin auf, wobei je Stempel 26 eine Ausnehmung vorgesehen ist. Die Ausnehmungen 28 sind derart ausgelegt, ausgestaltet und positioniert, dass sie die Stempel 26 darin aufnehmen. Die Gegenplatte 27 ist vorzugsweise aus einem Metall (z.B. Stahl) oder einem anderen Material von ausreichender Härte zum Zusammenwirken mit dem Stempel, um die Einbuchtungen zu formen, hergestellt. Die Pressplatte 29 weist Öffnungen 33 darin auf, wobei für jeden Stempel 26 eine Öffnung vorgesehen ist. Die Öffnungen 33 sind derart ausgelegt, ausgestaltet und positioniert, dass sie durch diese hindurch die Stempel 26 (oder wenigstens die filmberührenden Enden 26a) aufnehmen. Die Pressplatte 29 weist eine im Allgemeinen flache Kontaktoberfläche 34 auf, welche den Film berührt und diesen gegen eine im Allgemeinen flache Kontaktoberfläche 35 der Gegenplatte 27 festhält. Die Federelemente 30 sind zwischen der Pressplatte 29 und der Basis 31 angebracht und spannen die Pressplatte von der Basis weg vor. Die dargestellte Ausführungsform weist vier der Federelemente 30 auf, wobei jedoch auch mehr oder weniger verwendet werden können. Die Stempel 26 sind an der Basis 31 angebracht und den Öffnungen 33 entsprechend ausgerichtet. Die Stempel 26 und die Pressplatte 29 bewegen sich unter der vom Betätigungsglied 32 aufgebrachten Kraft gemeinsam. Das Betätigungsglied 32 kann bereitgestellt werden in Form eines Pneumatikzylinders mit Einlass- und Auslassöffnungen zum Anschließen von Luftschläuchen an die Maschine, welche zu einem Ventil geführt werden, das mit einem Kompressor verbunden ist, der vorzugsweise auf der Maschine angebracht ist. Bei anderen Ausführungsformen umfasst die Maschine ein anderes herkömmliches Betätigungsglied, beispielsweise einen Elektromotor, ein Solenoid usw.

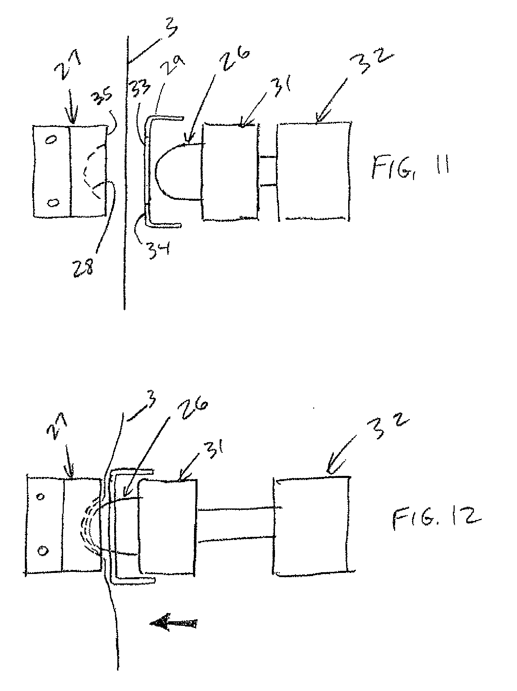

Wenn die Basis 31 seitlich (wie durch den Richtungspfeil in FIG. 12 angezeigt) von der eingefahrenen Position (siehe FIG. 11) in die ausgefahrene Position (siehe FIG. 12) bewegt wird, gelangt die Pressplatte 29 mit dem Film 3 in Berührung und drückt diesen gegen die Gegenplatte 27. Während die Basis seitlich weiterbewegt wird, wird die Pressplatte 29 durch die Gegenplatte 27 am Weiterbewegen gehindert. Demnach wird das Federelement 30 zusammengedrückt, während sich der Stempel 26 durch die Öffnung 33 seitlich weiterbewegt, in Kontakt mit dem Film 3, in die Ausnehmung 28, um den Film zu verformen und die Einbuchtung zu formen, und in die ausgefahrene Position. Während der Film 3 zwischen der Gegenplatte 27 und der Pressplatte 29 festgehalten wird, erfolgt die gesamte (oder im Wesentlichen die gesamte) Verformung im Film im Einbuchtungsbereich, wobei der Rest der Films nicht verformt wird und sich weiterhin zum Herstellen einer guten Versiegelung eignet. Wenn die Basis 31 seitlich in die eingefahrene Position zurückbewegt wird, lösen sich die Pressplatte 29 und der Stempel 26 von dem Film 3, woraufhin die im Film geformten Einbuchtungen zurückbleiben.

Darüber hinaus werden die Stempel 26 und die Gegenplatte 27 vorzugsweise erhitzt, damit die Einbuchtungen ihre Form gut beibehalten. Bei der dargestellten Ausführungsform weisen die Stempel 26 und die Gegenplatte 27 beispielsweise jeweils Bohrungen 36 bzw. 37 auf, die in diesen ausgebildet sind. Die Bohrungen 36 und 37 nehmen Heizelemente 38 bzw. 39 auf. Bei einer handelsüblichen Ausführungsform werden die Heizelemente 38 und 39 in Form elektrischer Widerstandsheizstäbe mit elektrischer Verdrahtung, die zur Schalttafel der Maschine 1 geführt ist, bereitgestellt. Die Stempel 26 und die Gegenplatte 27 sind aus einem leitfähigen Material hergestellt, welches die Wärme von den Heizelementen 38 und 39 auf den Film 3 überträgt. Die Heizelemente 38 und 39 werden mit einer Heizleistung gewählt, die derart ist, dass der Film 3 ausreichend erhitzt wird, um die Einbuchtungsform beizubehalten, jedoch nicht so stark ist, dass der Film seine Festigkeit verliert und vorzeitig reißen würde.

Bei einer alternativen Ausführungsform weist die Gegenplatte Öffnungen (an Stelle von Ausnehmungen) auf, welche die Stempel aufnehmen. Bei einer anderen alternativen Ausführungsform wird die Einbuchtungsformvorrichtung ohne die Pressplatte und die Federelemente vorgesehen. Und bei noch einer anderen alternativen Ausführungsform ist die Gegenplatte aus zwei Komponenten hergestellt, von denen mindestens eine seitlich bewegbar ist, um verschiedene Ausnehmungsbeabstandungen herzustellen, und die Basis ist aus zwei Komponenten hergestellt, von denen mindestens eine seitlich bewegbar ist, um verschiedene Stempelbeabstandungen herzustellen, welche den Ausnehmungsbeabstandungen entsprechen.

Nunmehr auf FIG. 13-20 Bezug nehmend umfasst die Quersiegelvorrichtung 11 zwei einander gegenüberliegend angeordnete Schweißbacken 13, von denen jede eine Kontaktoberfläche 40 (siehe auch FIG. 3) aufweist. Die Kontaktoberfläche 40 jeder Backe 13 ist vorzugsweise in einen ersten und einen zweiten Abschnitt 40a und 40b mit dazwischenliegendem Spalt 48 unterteilt. Die ersten Kontaktoberflächen 40a der Backen 13 wirken zusammen, um die untere Siegelungszone 15 herzustellen, und die zweiten Kontaktoberflächen 40b der Backen wirken zusammen, um die obere Siegelungszone 14 herzustellen.

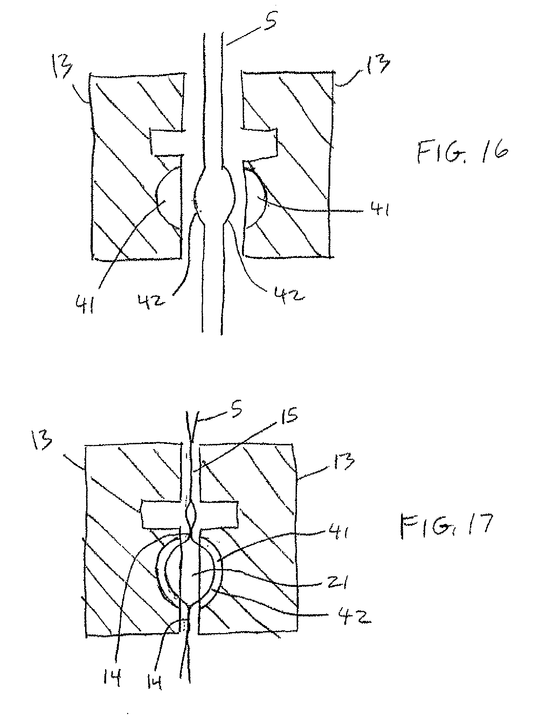

Darüber hinaus weisen die zweiten Kontaktoberflächen 40b der Backen 13 der vorliegenden Erfindung jeweils einen darin angeordneten Leerraum 41 auf. Die Leerräume 41 sind Hohlräume (Ausnehmungen, Durchgangslöcher usw.), die ausgelegt, ausgestaltet und positioniert sind, um (nachdem der Film 3 zu einem Schlauch 5 geformt wurde, wobei die beiden Einbuchtungen miteinander ausgerichtet sind) die miteinander ausgerichteten Einbuchtungen 42 darin aufzunehmen. Auf diese Weise bewegen sich die Backen 13 von einer offenen Position (siehe FIG. 16) in eine geschlossene Position (siehe FIG. 17), in der sie zusammenwirken, um einen Abschnitt des Schlauches 5 zu der oberen Quersiegelungszone 14 mit den miteinander ausgerichteten Einbuchtungen 42 zu formen, welche, da sie in den Leerräumen 41 aufgenommen werden, nicht miteinander versiegelt werden und in der Siegelungszone eine Blase 21 bilden. Die Leerräume 41 sind vorzugsweise vertikal außermittig und näher beim oberen Ende der zweiten Kontaktoberflächen 40b angeordnet. Auf diese Weise wird die Luftblase 21 näher bei der oberen Kante der oberen Quersiegelungszone 14 gebildet, so dass der obere Abschnitt der Siegelungszone als erster aufreißt, wenn die Blase zusammengedrückt wird, wie aus FIG. 2 hervorgeht.

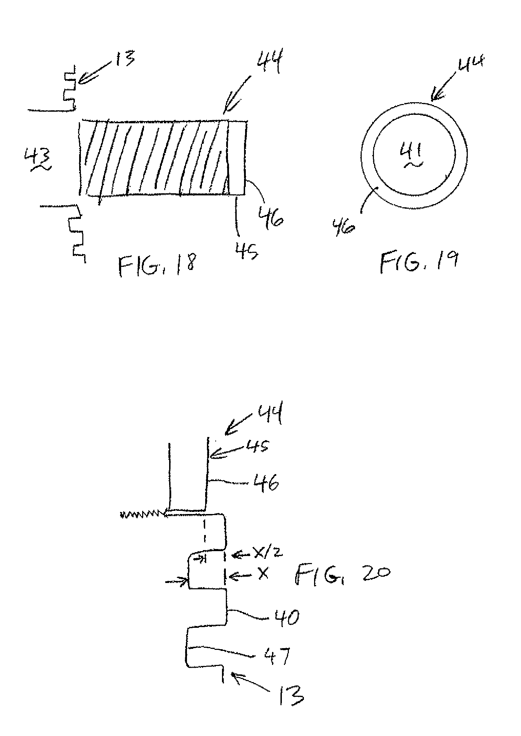

Bei einer handelsüblichen Ausführungsform umfasst die Quersiegelvorrichtung 11 eine Bohrung 43, die orthogonal durch die Kontaktoberfläche 40 ausgebildet ist, und eine Buchse 44, die in der Bohrung aufgenommen ist, wobei die Buchse 44 den Leerraum 41 definiert, wie in FIG. 18 und 19 dargestellt ist. Die Buchse 44 ist in der Bohrung 43 mittels zusammenpassender Gewinde oder anderer Befestigungskonstruktionen befestigt. Auf diese Weise kann die Tiefe des Leerraums 41 in Bezug auf die Kontaktoberfläche 40 eingestellt werden, um die präzise Versiegelung und Blasenbildung auch bei Schwankungen im Kunststofffilmmaterial, Verschleiß an den Komponenten usw. aufrechtzuerhalten.

Darüber hinaus umfasst die Buchse 44 vorzugsweise einen Bund 45, der peripher um den Leerraum 41 herum angeordnet ist. Jede Backe 13 ist sägezahnartig mit Rillen 47 in der Kontaktoberfläche 40 ausgebildet, der Bund 45 weist eine Kontaktoberfläche 46 auf, und der Bund ist vorzugsweise an der Backe angebracht, wobei die Bundkontaktoberfläche zwischen den Rillen 47 und der Backenkontaktoberfläche 40 angeordnet ist. Beispielsweise ergibt das Anordnen des Bunds 45 mit der Bundkontaktoberfläche 46 in ungefähr der Hälfte der Tiefe der Rillen 47 angeordnet im Allgemeinen gute Resultate. Mit anderen Worten beträgt, wenn die Rillentiefe bezogen auf die Kontaktoberfläche 40 "x" beträgt, die Bundkontaktoberflächentiefe vorzugsweise etwa "x/2", wie aus FIG. 20 hervorgeht. Auf diese Weise bildet die Bundkontaktoberfläche 46 ein peripheres (z.B. ringförmiges) Siegel 50 (siehe FIG. 1) um die Blase 21, welche, wenn die Blase 21 zusammengedrückt wird, das seitliche Austreten von Luft durch die Siegelungszone 14 verhindert.

Die Backen 13 werden zum Verschweißen des Schlauches 5 vorzugsweise erhitzt, um gute Siegelungen auszubilden. Bei der dargestellten Ausführungsform weisen beispielsweise die Backen 13 jeweils darin ausgebildete Bohrungen 48 zum Aufnehmen von Heizelementen 49a-c (gemeinsam "die Heizelemente 49") auf. Bei einer handelsüblichen Ausführungsform werden die Heizelemente 49 in Form elektrischer Widerstandsheizstäbe mit elektrischer Verdrahtung, die zur Schalttafel der Maschine 1 geführt ist, bereitgestellt. Demnach können die Heizelemente 49 von demselben Typ sein, der für die in diesem Dokument beschriebene Einbuchtungsformvorrichtung 24 bereitgestellt wird. Die Backen 13 sind aus einem leitfähigen Material hergestellt, welches die Wärme von den Heizelementen 49 auf den Schlauch 5 überträgt. Die Heizelemente 49 werden mit einer Heizleistung gewählt, die derart ist, dass der Schlauch 5 ausreichend erhitzt wird, um eine gute Siegelung herzustellen, jedoch nicht so stark ist, dass der Schlauch seine Festigkeit verliert und vorzeitig aufreißen würde.

Bei herkömmlichen Schlauchbeutelmaschinen weist jede Backe zwei Heizelemente mit derselben höheren Heizleistung zum Herstellen einer festen Siegelung auf. Bei der vorliegenden Erfindung weist jedoch jede der Backen 13 mindestens drei Heizelemente 49a-c auf. Die erste Kontaktoberfläche 40a wird durch ein Heizelement 49a mit einer höheren Heizleistung zum Herstellen einer festen Siegelung erhitzt. Analog dazu wird der untere Abschnitt der zweiten Kontaktoberfläche 40b durch ein Heizelement 49c mit einer höheren Heizleistung zum Herstellen einer festen Siegelung erhitzt. Allerdings wird der obere Abschnitt der zweiten Kontaktoberfläche 40b durch ein Heizelement 49b mit einer verhältnismäßig niedrigeren Heizleistung zum Herstellen einer nicht ganz so festen Siegelung erhitzt. Demnach liegt, wenn die Blase 21 zusammengedrückt wird und die obere Siegelungszone 14 aufreißt, die Bruchzone 22 zwischen der Blase und der Oberkante des Beutels 16, wo die Siegelung am schwächsten war. Darüber hinaus umfassen die Backen 13 vorzugsweise eine Isolierzone 51 zwischen den Heizelementen 49b und 49c der zweiten Kontaktoberfläche 40b. In der dargestellten Ausführungsform ist die Isolierzone 51 in Form einer luftgefüllten Öffnung, die an die zweite Kontaktoberfläche 40b angrenzt, zwischen den Heizelementen 49b und 49c angeordnet ist und sich entlang der gesamten oder im Wesentlichen der gesamten Länge der Backen 13 erstreckt, bereitgestellt.

Bei alternativen Ausführungsformen sind die Backen mit anderen Arten von Isolierzonen ausgestattet, beispielsweise mit einer Öffnung, die mit einem Isoliermaterial gefüllt ist, einer Öffnung, die sich durch die gesamte Länge der Backe erstreckt, und einem Gebläse, welches Luft durch die Öffnung treibt, Kühlschlangen, die durch die Backen geführt werden und ein Kühlmittel transportieren oder anderen im Stand der Technik bekannten Isolierelementen. Bei einer anderen alternativen Ausführungsform ist jede Backe in zwei Abschnitte unterteilt, mit einem Zwischenraum zwischen dem oberen und dem unteren Abschnitt der zweiten Kontaktoberfläche jeder Backe, wobei der Zwischenraum als Isolierzone dient.

Ferner umfasst die Maschine 16 Bedienelemente zum Bedienen der Einbuchtungsformvorrichtung 24 und der modifizierten Quersiegelvorrichtung 11. Bei einer handelsüblichen Ausführungsform umfasst die Maschine 16 eine speicherprogrammierbare Steuerung, die zum Bedienen der Filmtransportvorrichtung 6, damit diese den Film durch die Maschine mit einer gewünschten Geschwindigkeit vorschiebt, zum Anhalten der Filmtransportvorrichtung und zum Bedienen der Backen usw. programmiert wird. Bei der vorliegenden Erfindung ist die SPS mit zusätzlicher Programmierung zum zusätzlichen Bedienen der Einbuchtungsformvorrichtung 24 ausgestattet. Vorzugsweise ist die SPS programmiert, um das Betätigungsglied 32 während des Zeitraums, wenn die Filmtransportvorrichtung 6 den Schlauch 5 angehalten und die Quersiegelvorrichtung 11 betätigt hat, um die Quersiegelungen herzustellen und den gesiegelten Schlauch zu einem Beutel 16 abzutrennen, zu aktivieren. Somit muss die Maschine 1, um die Einbuchtungsformvorrichtung 24 zu betätigen, den Vorschub des Films nicht zu einem anderen Zeitpunkt als während ihres Anhaltens zum Betätigen der Quersiegelvorrichtung 11 anhalten.

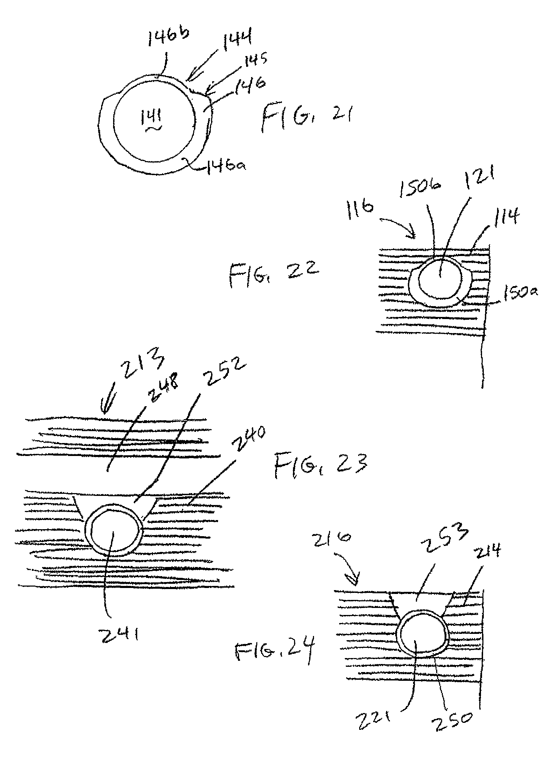

FIG. 21 und 22 zeigen eine Buchse 144 einer Quersiegelvorrichtung 111 gemäß einem zweiten erfindungsgemäßen Ausführungsbeispiel. Die Buchse 144 weist einen Bund 145 und eine Bundkontaktoberfläche 146 auf, welche einen Leerraum 141 peripher umgibt, ähnlich wie bei der oben beschriebenen Ausführungsform. Bei dieser Ausführungsform weist allerdings die Bundkontaktoberfläche 146 ein erstes Segment 146a auf, welches radial breiter als ein zweites Segment 146b ist. Das schmälere zweite Segment 146b ist vorzugsweise am oberen Ende der Backenkontaktoberfläche angeordnet, so dass die sich ergebende Siegelungszone 114 ein erstes Segment 50a und ein zweites Segment 50b, das schmäler als das erste Segment ist, aufweist. Auf diese Weise reißt, wenn die Blase 121 in der Siegelungszone 114 des Beutels 116 zusammengedrückt wird, das schmälere zweite Segment 50b als erstes auf.

FIG. 23 und 24 zeigen eine Schweißbacke 213 einer Quersiegelvorrichtung 211 gemäß einem dritten erfindungsgemäßen Ausführungsbeispiel. Die Backe 213 weist einen Leerraum 241 in einer Kontaktoberfläche 240 auf, ähnlich wie bei den oben beschriebenen Ausführungsformen. Bei dieser Ausführungsform weist allerdings die Backenkontaktoberfläche 240 einen Luftleitkanal 252 auf, der zwischen dem Leerraum 241 und dem Spalt 248 in der Backe 213 angeordnet ist. Bei einer handelsüblichen Ausführungsform ist der Luftleitkanal 252 etwa so breit wie oder breiter als der Leerraum 241 und ist nach außen/nach oben abgeschrägt ausgebildet, wenngleich andere Größen und Formen verwendet werden können. Vorzugsweise ist der Luftleitkanal 252 mindestens so tief in der Backenkontaktoberfläche 40 wie die sägezahnartigen Rillen. Auf diese Weise erzeugt der Luftleitkanal 252 einen nicht gesiegelten Bereich 253 in der entstehenden Siegelungszone 214, so dass die einzige Siegelung, die beim Zusammendrücken der Blase 221 in der Siegelungszone 214 des Beutels 216 aufgebrochen werden muss, die periphere Siegelung 250 ist.

Bei einer alternativen Ausführungsform sind die Leerräume, Stempel und Ausnehmungen derart ausgelegt und ausgestaltet, dass sie die Einbuchtungen und Blasen in anderen Formen und Größen herstellen. Beispielsweise können diese Komponenten oval ausgestaltet sein, um ovale Einbuchtungen und Blasen herzustellen. Die ovalen Blasen können in der Siegelungszone vertikal ausgerichtet sein, so dass sie dazu neigen, durch die Siegelungszone nach oben aufzuplatzen, oder sie können in der Siegelungszone horizontal ausgerichtet sein, so dass sie weniger Fläche einnehmen und die Siegelungszonen kleiner ausgelegt werden können, um Film zu sparen. Als weiteres Beispiel können diese Komponenten zum Herstellen zweier benachbarter Blasen konfiguriert sein, derart, dass, wenn diese zusammengedrückt werden, in dem Maß, in dem die Siegelungszone seitlich (und nicht nur nach außen/nach oben) aufreißt, diese gemeinsam aufplatzen, um gemeinsam eine Bruchzone zu bilden. Als noch ein weiteres Beispiel können diese Komponenten zum Herstellen von Blasen, die halbkreisförmig sind, konfiguriert sein, wobei das flache Segment näher beim oberen Ende der Siegelungszone angeordnet ist, so dass die Siegelungszone als erstes in diese Richtung aufreißt. Und bei noch einer anderen alternativen Ausführungsform weist die Backenkontaktoberfläche sägezahnartige Rillen auf, die abgewinkelt oder senkrecht angeordnet sind, um, wenn die Blase zusammengedrückt wird, die Luft nach außen/nach oben zu leiten.

In einem anderen Aspekt umfasst die vorliegende Erfindung ein Verfahren zum Herstellen eines in diesem Dokument beschriebenen Pop-to-Open-Beutels 16. Das Verfahren umfasst die Schritte des Zuführens von Film zu einer Schlauchbeutelmaschine, des Verformens des Films an zwei Stellen mittels zweier Stempel, um mindestens zwei Einbuchtungen in dem Film zu formen, des Formens des Films zu einem Schlauch, wobei die mindestens zwei Einbuchtungen miteinander ausgerichtet sind, des Siegelns des Schlauches mit Siegelbacken, um eine Quersiegelzone herzustellen, wobei die miteinander ausgerichteten Einbuchtungen in Leerräumen in den Siegelbacken aufgenommen werden und gemeinsam mindestens eine Luftblase in der Quersiegelzone definieren, und des Abtrennens gesiegelter Abschnitte des Schlauches zu Beuteln. Das Verfahren kann unter Anwendung der in diesem Dokument beschriebenen Schlauchbeutelmaschine oder unter Anwendung anderer ähnlicher Maschinen durchgeführt werden.

In einem weiteren Aspekt umfasst die vorliegende Erfindung einen Nachrüstsatz für die Installation auf einer herkömmlichen Schlauchbeutelmaschine. Der Nachrüstsatz umfasst eine der in diesem Dokument beschriebenen Einbuchtungsformvorrichtungen 24 und eine der in diesem Dokument beschriebenen Quersiegelvorrichtungen 25. Die Einbuchtungsformvorrichtung wird auf der herkömmlichen Maschine am Vorderende (ehe der Film zu dem Schlauch geformt wird) eingebaut, und die Quersiegelvorrichtung wird am Hinterende (nachdem der Film zu dem Schlauch geformt wurde) mittels herkömmlicher Montagekonstruktionen wie Klammern, welche sich mit Stangen, Stäben oder anderen Elementen der Maschine verbinden lassen, auf der Maschine eingebaut. Darüber hinaus kann der Nachrüstsatz die Montageteile zum Anbringen der Einbuchtungsformvorrichtung und der Quersiegelvorrichtung an der Maschine sowie Steuerleitungen (elektrische Drähte, pneumatische Schläuche usw.) zum betriebsfähigen Anschließen dieser Vorrichtungen an die entsprechenden Teile der Maschine (elektrische Schalttafel, Luftkompressor usw.) umfassen.

Es sollte festgehalten werden, dass in dieser gesamten Patentanmeldung die Begriffe "oberer/obere/oberes" und "unterer/untere/unteres" und dergleichen verwendet werden, um die relativen Positionen der Siegelzonen typischer Beutel zu bezeichnen. Diese Begriffe sind allerdings nicht einschränkend auszulegen, da die beschriebene Erfindung zur Verwendung in Maschinen adaptiert werden kann, welche Beutel herstellt, die sich an einer unteren oder seitlichen Siegelungszone öffnen lassen.

Es versteht sich, dass diese Erfindung nicht auf die konkreten Vorrichtungen, Verfahren, Bedingungen oder Parameter beschränkt ist, die in diesem Dokument beschrieben und/oder dargestellt werden, und dass die in diesem Dokument verwendete Terminologie dem Zweck des Beschreibens konkreter Ausführungsformen auf lediglich beispielhafte Weise dient. Demnach ist die Terminologie weit gefasst auszulegen und sie beabsichtigt nicht, die beanspruchte Erfindung einzuschränken. Beispielsweise schließen in der Beschreibung sowie den beiliegenden Ansprüchen die Singularformen "ein/eine/eines" den Plural mit ein, der Begriff "oder" bedeutet "und/oder" und eine Bezugnahme auf einen konkreten Zahlenwert umfasst mindestens diesen konkreten Wert, sofern der Kontext nicht ausdrücklich etwas anderes auferlegt. Darüber hinaus sind jedwede in diesem Dokument beschriebenen Verfahren nicht auf die beschriebene Schrittabfolge beschränkt, sondern können in anderen Abfolgen durchgeführt werden, sofern in diesem Dokument nicht ausdrücklich etwas Gegenteiliges angeführt wird.

Wenngleich die Erfindung mittels beispielhafter Ausführungsformen dargestellt und beschrieben wurde, wird es für Fachkundige klar zu erkennen sein, dass zahlreiche Modifikationen, Hinzufügungen und Weglassungen daran vorgenommen werden können, ohne von Wesensart und Umfang der Erfindung, welche durch die folgenden Ansprüche definiert werden, abzugehen.

## Patentansprüche

1. Schlauchbeutelmaschine, umfassend:
ein vorderes Ende, welches einen Film entgegennimmt, der von einer Vorratsrolle abgewickelt wird;
eine Einbuchtungsformvorrichtung, umfassend zwei Stempel, die sich von einer eingefahrenen Position in eine ausgefahrene Position bewegen, wobei die Stempel in der eingefahrenen Position den Film nicht berühren und die Stempel in der ausgefahrenen Position den Film berühren und verformen, um zwei Einbuchtungen zu formen;
eine Formschulter, welche den Film zu einem Schlauch umformt, wobei die beiden Einbuchtungen miteinander ausgerichtet sind;
eine Folientransportvorrichtung, welche den Film und den Schlauch durch die Maschine transportiert;
ein vertikal ausgerichtetes Füllrohr zum Aufnehmen und Befüllen des Schlauches;
eine Längssiegelvorrichtung, welche Kanten des Films siegelt, um in dem Schlauch eine Längssiegelung herzustellen;
eine Quersiegelvorrichtung, umfassend zwei einander gegenüberliegend angeordnete Schweißbacken, wobei jede einen Leerraum aufweist, der angeordnet ist, um, nachdem der Film mit den zwei Einbuchtungen miteinander ausgerichtet zu einem Schlauch geformt wurde, die miteinander ausgerichteten Einbuchtungen darin aufzunehmen, so dass die Backen zusammenwirken, um einen Abschnitt des Schlauches zu einer Siegelungszone zu formen, wobei die miteinander ausgerichteten Einbuchtungen in der Siegelungszone eine Blase bilden; und
eine Trennvorrichtung, welche den Schlauchbeutel von dem Schlauch trennt.

2. Schlauchbeutelmaschine nach Anspruch 1, wobei die Schweißbacken drei Heizelemente aufweisen, die betrieben werden, um an den Backen eine Zone mit geringerer Wärme und an den Backen eine Zone mit größerer Wärme zu schaffen.

3. Schlauchbeutel, der durch die Maschine aus Anspruch 1 hergestellt wird.

4. Verfahren zum Herstellen eines Schlauchbeutels, umfassend folgende Schritte:
Zuführen von Film zu einer Schlauchbeutelmaschine;
Verformen des Films an zwei Stellen mittels zweier Stempel, um zwei Einbuchtungen in dem Film zu formen;
Formen des Films zu einem Schlauch, wobei die beiden Einbuchtungen miteinander ausgerichtet sind;
Siegeln des Schlauches mittels Schweißbacken, um eine Quersiegelungszone zu bilden, wobei die ausgerichteten Einbuchtungen in Leerräumen in den Siegelbacken aufgenommen werden und gemeinsam eine Luftblase in der Quersiegelungszone definieren; und
Abtrennen gesiegelter Abschnitte des Schlauches zu Säcken.

5. Schlauchbeutel, der anhand des Verfahrens aus Anspruch 4 hergestellt wird.

6. Nachrüstsatz zum Installieren auf einer Maschine, welche Kunststofffilm zu Schlauchbeuteln formt, wobei der Nachrüstsatz umfasst:
eine Einbuchtungsformvorrichtung, umfassend zwei Stempel, die sich von einer eingefahrenen Position in eine ausgefahrene Position bewegen, wobei die Stempel in der eingefahrenen Position den Film nicht berühren und die Stempel in der ausgefahrenen Position den Film berühren und verformen, um zwei Einbuchtungen zu formen; und
eine Quersiegelvorrichtung, umfassend zwei einander gegenüberliegend angeordnete Schweißbacken, wobei jede einen Leerraum aufweist, der angeordnet ist, um, nachdem der Film mit den zwei Einbuchtungen miteinander ausgerichtet zu einem Schlauch geformt wurde, die miteinander ausgerichteten Einbuchtungen darin aufzunehmen, so dass die Backen zusammenwirken, um einen Abschnitt des Schlauches zu einer Siegelungszone zu formen, wobei die miteinander ausgerichteten Einbuchtungen in der Siegelungszone eine Blase bilden.
